# EUROPEAN PATENT APPLICATION

(11) **EP 4 521 587 A1**
(43) Date of publication of application: **12.03.2025**
(21) Application number: 23827406.2
(22) Date of filing: 05.06.2023
(51) Int. Cl.: H02J 7/00, H02M 3/158, H02J 7/34, H02M 3/156

(54) **VOLTAGE-ADJUSTABLE CHARGING CIRCUIT AND ELECTRONIC DEVICE COMPRISING SAME**

(30) Priority: 24.06.2022 KR 20220077384; 22.08.2022 KR 20220104661
(71) Applicant: Samsung Electronics Co., Ltd., Suwon-si, Gyeonggi-do 16677 (KR)
(72) Inventor: CHA, Jaedeok, Suwon-si, Gyeonggi-do 16677 (KR)
(74) Representative: Appleyard Lees IP LLP
(86) International application number: PCT/KR2023/007691
(87) International publication number: WO 2023/249286

(57) **Abstract**

This electronic device may comprise a charging circuit which supplies power to a battery, wherein: the charging circuit comprises a first buck circuit including a first switching element and a second switching element, a second buck circuit including a third switching element and a fourth switching element, and a boost circuit including a fifth switching element and a sixth switching element; an input voltage is applied to an input node of the first switching element and an input node of the third switching element; one end of a first inductor is connected to a first connection node between the first switching element and the second switching element of the first buck circuit; one end of a second inductor is connected to a second connection node between the third switching element and the fourth switching element of the second buck circuit; the other end of the first inductor and the other end of the second inductor are connected to a third connection node between the fifth switching element and the sixth switching element of the boost circuit; and the fifth switching element is connected in parallel to the battery and a capacitor.

## Description

### [Technical Field]

Embodiments disclosed in this specification relate to a voltage-adjustable charging circuit and an electronic device including the same.

### [Background Art]

An electronic device may have a circuit capable of converting a voltage. For example, the circuit capable of converting the voltage includes a buck converter, a boost converter, or a buck-boost converter.

The buck converter may decrease an input voltage. The boost converter may increase the input voltage. The buck-boost converter may increase or decrease the input voltage under control.

### [Disclosure]

### [Technical Solution]

According to an embodiment of the disclosure, an electronic device may include a battery, an interface capable of being electrically connected to an external power source and receiving power from the external power source, and a charging circuit that supplies power to the battery based on an input voltage supplied through the interface. In an embodiment, the charging circuit may include a first buck circuit including a first switching element and a second switching element, a second buck circuit including a third switching element and a fourth switching element, and a boost circuit including a fifth switching element and a sixth switching element. In an embodiment, the input voltage may be applied to an input node of the first switching element and an input node of the third switching element. In an embodiment, one end of a first inductor may be connected to a first connection node between the first switching element and the second switching element of the first buck circuit. In an embodiment, one end of a second inductor may be connected to a second connection node between the third switching element and the fourth switching element of the second buck circuit. In an embodiment, the other end of the first inductor and the other end of the second inductor may be connected to a third connection node between the fifth switching element and the sixth switching element of the boost circuit. In an embodiment, the fifth switching element may be connected in parallel to the battery and a capacitor.

According to an embodiment of the disclosure, the charging circuit may include a first buck circuit including a first switching element and a second switching element, a second buck circuit including a third switching element and a fourth switching element, and a boost circuit including a fifth switching element and a sixth switching element. In an embodiment, an input voltage may be applied to an input node of the first switching element and an input node of the third switching element. In an embodiment, one end of a first inductor may be connected to a first connection node between the first switching element and the second switching element of the first buck circuit. In an embodiment, one end of a second inductor may be connected to a second connection node between the third switching element and the fourth switching element of the second buck circuit. In an embodiment, the other end of the first inductor and the other end of the second inductor may be connected to a third connection node between the fifth switching element and the sixth switching element of the boost circuit. In an embodiment, the fifth switching element may be connected in parallel to a battery and a capacitor.

### [Description of Drawings]

FIG. 1 is a block diagram of an electronic device, according to an embodiment of the disclosure.
FIG. 2 is a block diagram of a charging circuit, according to an embodiment of the disclosure.
FIG. 3A is a circuit diagram of a charging circuit, according to an embodiment of the disclosure.
FIG. 3B is a timing diagram of a charging circuit, according to an embodiment of the disclosure.
FIG. 4A is a block diagram of a charging circuit, according to an embodiment of the disclosure.
FIG. 4B is a block diagram of a charging circuit, according to an embodiment of the disclosure.
FIG. 5 is a flowchart of an electronic device, according to an embodiment of the disclosure.
FIG. 6 is a flowchart of an electronic device, according to an embodiment of the disclosure.

With regard to description of drawings, the same or similar components will be marked by the same or similar reference signs.

### [Mode for Invention]

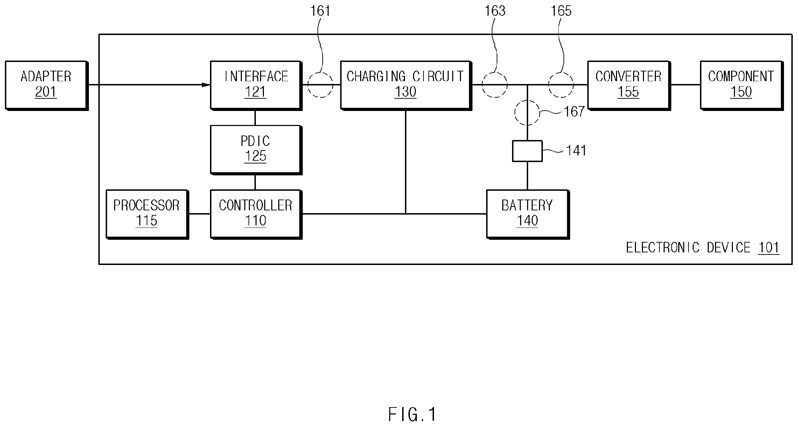

FIG. 1 is a block diagram of an electronic device 101, according to an embodiment of the disclosure.

Referring to FIG. 1, the electronic device 101 may include a controller 110, a processor 115, an interface 121, a power delivery integrated circuit (PDIC) 125, a charging circuit 130, a battery 140, a converter 155, a component 150, or a combination thereof. In some embodiments, at least one of these components (e.g., the converter 155 or the PDIC 125) may be omitted from the electronic device 101, or one or more other components (e.g., a display) may be added to the electronic device 101. In some embodiments, at least one of these components may be replaced with another configuration.

In an embodiment, the electronic device 101 may receive power from an external electronic device (e.g., an adapter 201). In an embodiment, the electronic device 101 may charge the battery 140 based on the power. In an embodiment, the electronic device 101 may supply the power to the component 150.

In an embodiment, the processor 115 may launch software (e.g., a program). In an embodiment, the processor 115 may control at least another component (e.g., hardware or software component) of the electronic device 101 connected to the processor 115. In an embodiment, the processor 115 may process and calculate various types of data.

In an embodiment, the processor 115 may provide state information of the electronic device 101 to the controller 110. In an embodiment, the state information may include information about the operation state of the electronic device 101. In an embodiment, the operation state of the electronic device 101 may include an active state, a standby state (or, sleep state), or an off state. In an embodiment, the operation state of the electronic device 101 may include whether the adapter 201 is connected, or supply power of the adapter 201. In an embodiment, the state information may include information about a state of the battery 140. In an embodiment, the state of the battery 140 may include the number of battery cells of the battery 140.

In an embodiment, the controller 110 may control a charging operation of the charging circuit 130 for the battery 140. In an embodiment, the controller 110 may control the charging operation of the charging circuit 130 for the battery 140 based on the required voltage of the battery 140. In an embodiment, the controller 110 may control the charging operation of the charging circuit 130 for the battery 140 based on the voltage of the supplied power.

In an embodiment, the interface 121 may support one or more specified protocols capable of being used such that the electronic device 101 is electrically connected to an external electronic device (e.g., the adapter 201). For example, the interface 121 may include a universal serial bus (USB) interface. However, this is only an example, and various embodiments are not limited thereto. For example, another interface (e.g., a charging interface or an interface for wireless charging) other than the USB interface may be replaced with the configuration of the interface 121.

In an embodiment, the PDIC 125 may recognize a resistance value through the interface 121 (e.g., at least one specified pin (e.g., the CC pin) of the USB interface). In an embodiment, the PDIC 125 may identify that the electronic device 101 is electrically connected to the external electronic device (e.g., the adapter 201), based on a resistance value of a pull-up resistor and/or a pull-down resistor.

In an embodiment, the PDIC 125 may determine the role of the electronic device 101. In an embodiment, the PDIC 125 may determine the role (e.g., a source device or a sink device) of the electronic device 101 based on the resistance value.

In an embodiment, the PDIC 125 may obtain information of the external electronic device (e.g., the adapter 201) through the interface 121 (e.g., at least one specified pin of the USB interface (e.g., the CC pin)). In an embodiment, the information of the external electronic device (e.g., the adapter 201) may include vendor identification (ID) information and/or product ID information. In an embodiment, the information about the external electronic device (e.g., the adapter 201) may include information (e.g., source capability) about the supportable power and/or voltage.

In an embodiment, the PDIC 125 may request the external electronic device (e.g., the adapter 201) to supply power. In an embodiment, the PDIC 125 may request the external electronic device (e.g., the adapter 201) to supply power based on the required power. In an embodiment, the required power may be determined based on information (e.g., source capability) about the supportable power and/or voltage. In an embodiment, the required power may be determined based on information (e.g., a required voltage, a required current, and/or the number of battery cells) about the battery 140.

In an embodiment, the charging circuit 130 may supply power, which is delivered through the interface 121, to other components (e.g., the processor 115, the controller 110, the battery 140, and/or the component 150) of the electronic device 101. In an embodiment, the power delivered through the interface 121 may be power from the external electronic device (e.g., the adapter 201). Hereinafter, the power from the external electronic device (e.g., the adapter 201) may be referred to as "external power".

In an embodiment, the charging circuit 130 may adjust (e.g., decrease (or buck), or increase (or boost)) the voltage value of the power delivered through the interface 121. In an embodiment, the charging circuit 130 may adjust the voltage value of the power to a voltage value for a specified component (e.g., the battery 140). In an embodiment, the charging circuit 130 may adjust the voltage value of the power based on a voltage value and/or a current value at a target point 167. In an embodiment, when the voltage value at an input point 161 is lower than the voltage value at the target point 167, the charging circuit 130 may increase the voltage value of the power. In an embodiment, when the voltage value at the input point 161 is higher than the voltage value at the target point 167, the charging circuit 130 may decrease the voltage value of the power. In an embodiment, the current value at an output point 163 may be the same as the sum of the current value at the target point 167 and the current value at a point 165.

In an embodiment, the battery 140 may be electrically connected to the charging circuit 130 and/or the converter 155 through a switch 141. In an embodiment, the battery 140 may be electrically disconnected from the charging circuit 130 and/or the converter 155 through the switch 141.

In an embodiment, the battery 140 may be charged based on the power input through the charging circuit 130. In an embodiment, the battery 140 may supply the charged power to the component 150.

In an embodiment, the battery 140 may include one or more battery cells. In an embodiment, the battery cell may operate in a specified voltage range (e.g., about 3 to about 4.35 volts (V)). In an embodiment, when the battery 140 includes 'N' battery cells, the battery 140 may operate in a voltage range of about "N×3" V to about "N×4.35" V. Here, 'N' is an integer greater than or equal to 1.

In an embodiment, the converter 155 may be a DC/DC converter.

In an embodiment, the converter 155 may supply power to the component 150. In an embodiment, the converter 155 may supply power having a voltage value for the component 150.

In an embodiment, the converter 155 may adjust the voltage at the point 165 so as to have the voltage value for the component 150. In an embodiment, the converter 155 may supply power having an adjusted voltage value to the component 150.

In an embodiment, the component 150 may be another component (e.g., a display, a speaker, or a communication module) mounted on the electronic device 101. In an embodiment, the component 150 may operate based on the power supplied through the converter 155.

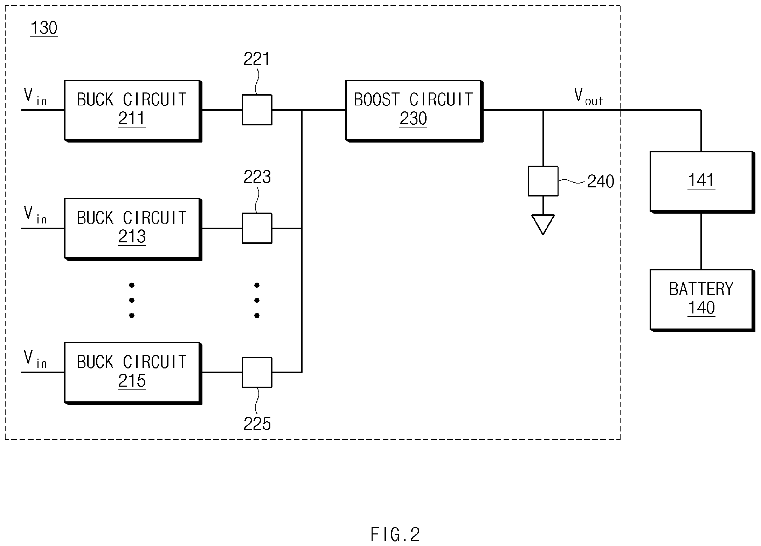

FIG. 2 is a block diagram of the charging circuit 130, according to an embodiment of the disclosure.

Referring to FIG. 2, the charging circuit 130 may include two or more buck circuits 211, 213, and 215, and a boost circuit 230. In an embodiment, the charging circuit 130 may include two or more inductors 221, 223, and 225. In an embodiment, the charging circuit 130 may include a capacitor 240.

In an embodiment, an input voltage Vᵢₙ may be applied to the two or more buck circuits 211, 213, and 215. In an embodiment, the input voltage Vᵢₙ may correspond to a voltage of external power.

In an embodiment, each of the two or more buck circuits 211, 213, and 215 may be electrically connected to a different inductor among the two or more inductors 221, 223, and 225. For example, the buck circuit 211 (e.g., the first buck circuit 211) may be electrically connected to the inductor 221 (e.g., the first inductor 221); the buck circuit 213 (e.g., the second buck circuit 213) may be electrically connected to the inductor 223 (e.g., the second inductor 223); and, the buck circuit 215 (e.g., the third buck circuit 215) may be electrically connected to the inductor 225 (e.g., the third inductor 225).

In an embodiment, an output voltage Vₒᵤₜ of the boost circuit 230 may be applied to an external component (e.g., the battery 140, the converter 155, and/or the component 150).

In an embodiment, the boost circuit 230 may be electrically connected to the two or more inductors 221, 223, and 225. In an embodiment, the boost circuit 230 may be electrically connected to the capacitor 240.

In an embodiment, the charging circuit 130 may adjust the input voltage Vᵢₙ to the output voltage Vₒᵤₜ. In an embodiment, the charging circuit 130 may adjust the input voltage Vᵢₙ to the output voltage Vₒᵤₜ by using the boost circuit 230 and at least one buck circuit among the two or more buck circuits 211, 213, and 215. In an embodiment, the charging circuit 130 may adjust the input voltage Vᵢₙ to the output voltage Vₒᵤₜ based on a voltage value and/or a current value at the target point 167. In an embodiment, the output voltage Vₒᵤₜ may be a voltage for charging the battery 140. In an embodiment, when the charging circuit 130 adjusts the input voltage Vᵢₙ to the output voltage Vₒᵤₜ, the capacitor 240 and at least one inductor, which is electrically connected to the buck circuit, from among the two or more inductors 221, 223, and 225 may be used.

In an embodiment, the charging circuit 130 may adjust the input voltage Vᵢₙ to the output voltage Vₒᵤₜ by using one buck circuit. In an embodiment, the charging circuit 130 may adjust the input voltage Vᵢₙ to the output voltage Vₒᵤₜ by using the buck circuit 211, the inductor 221, the boost circuit 230, and the capacitor 240. In an embodiment, when increasing the input voltage Viₙ, the charging circuit 130 may allow switches included in the boost circuit 230 to be alternately turned on and off. In an embodiment, when decreasing the input voltage Viₙ, the charging circuit 130 may allow switches included in the buck circuit 211 to be alternately turned on and off.

In an embodiment, the charging circuit 130 may adjust the input voltage Vᵢₙ to the output voltage Vₒᵤₜ by using two buck circuits. In an embodiment, the charging circuit 130 may adjust the input voltage Vᵢₙ to the output voltage Vₒᵤₜ by using the buck circuit 211, the buck circuit 213, the inductor 221, the inductor 223, the boost circuit 230, and the capacitor 240. In an embodiment, when increasing the input voltage Viₙ, the charging circuit 130 may allow switches included in the boost circuit 230 to be alternately turned on and off. In an embodiment, when decreasing the input voltage Viₙ, the charging circuit 130 may allow switches included in the buck circuit 211 and the buck circuit 213 to be alternately turned on and off. In an embodiment, a first control period for the switches of the buck circuit 211 may be the same as a second control period for the switches of the buck circuit 213. In an embodiment, a start time point of the first control period may be different from a start time point of the second control period. In an embodiment, a phase of the first control period may be different from a phase of the second control period. In an embodiment, the charging circuit 130 may control the switches of the buck circuit 211 from the first time point at the first control period, and may control the switches of the buck circuit 213 from the second time point at the second control period. In an embodiment, a phase difference between the first control period and the second control period may correspond to 180 degrees.

In an embodiment, the charging circuit 130 may adjust the input voltage Vᵢₙ to the output voltage Vₒᵤₜ by using 'M' or more buck circuits ('M' is an integer greater than or equal to 3). In an embodiment, the charging circuit 130 may adjust the input voltage Vᵢₙ to the output voltage Vₒᵤₜ by using the 'M' buck circuits 211, 213, and 215, the 'M' inductors 221, 223, and 225, the boost circuit 230, and the capacitor 240. In an embodiment, when increasing the input voltage Viₙ, the charging circuit 130 may allow switches included in the boost circuit 230 to be alternately turned on and off. In an embodiment, when decreasing the input voltage Viₙ, the charging circuit 130 may allow the switches included in each of the 'M' buck circuits to be alternately turned on and off. In an embodiment, when 'M' is 3, the first control period for the switches of the buck circuit 211, the second control period for the switches of the buck circuit 213, and the third control period for the switches of the buck circuit 215 may be the same as each other. In an embodiment, the start time points of the first control period, the second control period, and the third control period may be different from each other. In an embodiment, the phase of the first control period, the phase of the second control period, and the phase of the third control period may be different from each other. In an embodiment, the charging circuit 130 may control the switches of the buck circuit 211 from the first time point at the first control period, may control the switches of the buck circuit 213 from the second time point at the second control period, and may control the switches of the buck circuit 215 from the third time point at the third control period. In an embodiment, the phase difference between adjacent control periods may correspond to a value obtained by dividing 360 degrees by 'M'. In an embodiment, a phase difference between the first control period and the second control period may correspond to 120 degrees. In an embodiment, the phase difference between the second control period and the third control period may correspond to 120 degrees.

In an embodiment, the charging circuit 130 may adjust the input voltage Vᵢₙ to the output voltage Vₒᵤₜ based on the voltage value of the input voltage Vᵢₙ. In an embodiment, the charging circuit 130 may adjust the input voltage Vᵢₙ to the output voltage Vₒᵤₜ based on the voltage value of the input voltage Vᵢₙ and the required voltage of the battery 140. In an embodiment, the charging circuit 130 may decrease or increase the input voltage Vᵢₙ based on the voltage value of the input voltage Vᵢₙ and the required voltage of the battery 140. In an embodiment, the charging circuit 130 may decrease or increase the input voltage Vᵢₙ based on the required voltage of the battery 140 and the voltage value of the input voltage Vᵢₙ as shown in Table 1 below.

**[Table 1]**

| | | Battery voltage range | |
|---|---|---|---|
| Input voltage (Vᵢₙ) | First voltage range (e.g., about 6 to about 8.8 V) | Second voltage range (e.g., about 9 to about 13.2 V) | third voltage range (e.g., about 12 to about 17.6 V) |
| First voltage (e.g., about 5 V) | Boost | Boost | Boost |
| Second voltage (e.g., about 9 V) | 1 buck | 1 buck or boost | Boost |
| Third voltage (e.g., about 15 V) | 1 buck | 1 buck | 1 buck or boost |
| Fourth voltage (e.g., about 20 V) | 2 buck | 2 buck | 2 buck |
| Fifth voltage (e.g., about 28 V) | 2 buck | 2 buck | 2 buck |
| Sixth voltage (e.g., about 36 V) | 3 buck | 3 buck | 3 buck |
| Seventh voltage (e.g., about 48 V) | 4 buck | 4 buck | 4 buck |

In Table 1, when the battery voltage range is a first voltage range (e.g., about 6 to about 8.8 V), the battery 140 may be a battery in which two battery cells are connected in series. When the battery voltage range is a second voltage range (e.g., about 9 to about 13.2 V), the battery 140 may be a battery in which three battery cells are connected in series. When the battery voltage range is a third voltage range (e.g., about 12 to about 17.6 V), the battery 140 may be a battery in which four battery cells are connected in series.

Referring to Table 1, when the input voltage Vᵢₙ is a first voltage (e.g., approximately 5 V) and the battery cells are 2, 3, or 4 (e.g., the battery voltage range is the first voltage range, the second voltage range, or the third voltage range), the charging circuit 130 may increase (boost) the input voltage Vᵢₙ.

When the input voltage Vᵢₙ is a second voltage (e.g., about 9 V) and the number of battery cells is 2 (e.g., the battery voltage range is the first voltage range), the charging circuit 130 may decrease (buck) the input voltage Vᵢₙ by using one buck circuit. When the input voltage Vᵢₙ is the second voltage (e.g., about 9 V) and the number of battery cells is 3 (e.g., the battery voltage range is the second voltage range), the charging circuit 130 may decrease (buck) the input voltage Vᵢₙ by using one buck circuit or may increase (boost) the input voltage Vᵢₙ. When the input voltage Vᵢₙ is the second voltage (e.g., about 9 V) and the number of battery cells is 4 (e.g., the battery voltage range is the third voltage range), the charging circuit 130 may increase (boost) the input voltage Vᵢₙ.

When the input voltage Vᵢₙ is a third voltage (e.g., about 15 V) and the number of battery cells is 2 or 3 (e.g., the battery voltage range is the first voltage range or the second voltage range), the charging circuit 130 may decrease (buck) the input voltage Vᵢₙ by using one buck circuit. When the input voltage Vᵢₙ is the third voltage (e.g., about 15 V) and the number of battery cells is 4 (e.g., the battery voltage range is a third voltage range), the charging circuit 130 may decrease (buck) the input voltage Vᵢₙ by using one buck circuit or may increase (boost) the input voltage Vᵢₙ.

When the input voltage Vᵢₙ is a fourth voltage (e.g., about 20 V) and the number of battery cells is 2, 3, or 4 (e.g., the battery voltage range is the first voltage range, the second voltage range, or the third voltage range), the charging circuit 130 may decrease (buck) the input voltage Vᵢₙ by using two buck circuits.

When the input voltage Vᵢₙ is a fifth voltage (e.g., about 28 V) and the number of battery cells is 2, 3, or 4 (e.g., the battery voltage range is the first voltage range, the second voltage range, or the third voltage range), the charging circuit 130 may decrease (buck) the input voltage Vᵢₙ by using two buck circuits.

When the input voltage Vᵢₙ is the sixth voltage (e.g., about 36 V) and the number of battery cells is 2, 3, or 4 (e.g., the battery voltage range is the first voltage range, the second voltage range, or the third voltage range), the charging circuit 130 may decrease (buck) the input voltage Vᵢₙ by using three buck circuits.

When the input voltage Vᵢₙ is a seventh voltage (e.g., about 48 V) and the number of battery cells is 2, 3, or 4 (e.g., the battery voltage range is the first voltage range, the second voltage range, or the third voltage range), the charging circuit 130 may decrease (buck) the input voltage Vᵢₙ by using four buck circuits. The numerical values of input voltages and battery voltage ranges described in Table 1 above are following an embodiment, and various embodiments are not limited thereto. The numerical values of input voltages and the battery voltage range may vary depending on situations.

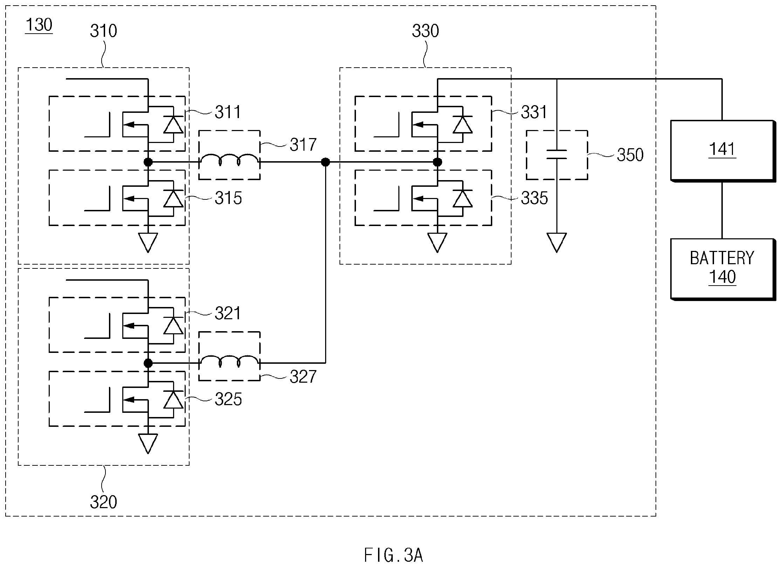

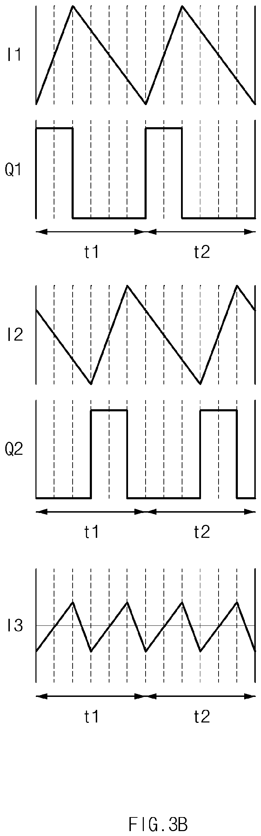

FIG. 3A is a circuit diagram of the charging circuit 130, according to an embodiment of the disclosure. FIG. 3B is a timing diagram of the charging circuit 130, according to an embodiment of the disclosure.

Referring to FIG. 3A, the charging circuit 130 may be illustrated as including two buck circuits 310 and 320. In an embodiment, the charging circuit 130 may include the two buck circuits 310 and 320 (e.g., 211, 213 and/or 215 of FIG. 2), two inductors 317 and 327 (e.g., 221, 223 and/or 225 of FIG. 2), a boost circuit 330 (e.g., 230 of FIG. 2) and a capacitor 350 (e.g., 240 of FIG. 2).

In an embodiment, the buck circuit 310 may include two switches 311 and 315. In an embodiment, an input voltage may be applied to one end of the switch 311. In an embodiment, the other end of the switch 311 may be electrically connected to one end of the switch 315. In an embodiment, the other end of the switch 315 may be electrically connected to ground. In an embodiment, the other end of the switch 311 and one end of the switch 315 may be electrically connected to one end of the inductor 317. For example, one end of the inductor 317 may be connected to a connection node between the other end of the switch 311 and one end of the switch 315.

In an embodiment, the buck circuit 320 may include two switches 321 and 325. In an embodiment, an input voltage may be applied to one end of the switch 321. In an embodiment, the other end of the switch 321 may be electrically connected to one end of the switch 325. In an embodiment, the other end of the switch 325 may be electrically connected to ground. In an embodiment, the other end of the switch 321 and one end of the switch 325 may be electrically connected to one end of the inductor 327. For example, one end of the inductor 327 may be connected to a connection node between the other end of the switch 321 and one end of the switch 325.

In an embodiment, the boost circuit 330 may include two switches 331 and 335. In an embodiment, one end of the switch 331 may be electrically connected to one end of the capacitor 350. In an embodiment, the voltage at the one end of the switch 331 and the voltage at the one end of the capacitor 350 may have an output voltage. In an embodiment, the one end of the switch 331 and the one end of the capacitor 350 may be electrically connected to an external component (e.g., the battery 140 and/or the converter 155). In an embodiment, the other end of the switch 331 may be electrically connected to one end of the switch 335. In an embodiment, the other end of the switch 335 may be electrically connected to ground. In an embodiment, the other end of the switch 331 and the one end of the switch 335 may be electrically connected to the other end of the inductor 317. In an embodiment, the other end of the switch 331 and the one end of the switch 335 may be electrically connected to the other end of the inductor 327. For example, the other end of the inductor 317 and the other end of the inductor 327 may be connected to a connection node between the other end of the switch 331 and one end of the switch 335.

In an embodiment, the charging circuit 130 may allow the switches 331 and 335 to be alternately turned on and off. In an embodiment, when increasing the input voltage, the charging circuit 130 may control the switches 331 and 335 such that the switches 331 and 335 are alternately turned on and off. In an embodiment, when the switch 331 is turned on, the charging circuit 130 may control the switches 331 and 335 such that the switch 335 is turned off. In an embodiment, when the switch 331 is turned off, the charging circuit 130 may control the switches 331 and 335 such that the switch 335 is turned on.

In an embodiment, the charging circuit 130 may control the switches 331 and 335 such that the voltage of one end of the switch 331 has a specified voltage. In an embodiment, the switches 331 and 335 may be controlled based on an on/off ratio such that the voltage of one end of the switch 331 has a specified voltage. In an embodiment, the on/off ratio may be a ratio between a period, in which the switch 331 is turned on during a specified period, and a period in which the switch 331 is turned off during the specified period.

In an embodiment, while the switches 331 and 335 are alternately controlled (or, while the input voltage is increased), the charging circuit 130 may set the on and off of the switches 311, 315, 321, and 325 of at least one buck circuit among the two buck circuits 310 and 320. In an embodiment, the charging circuit 130 may allow the switches 321 and 325 to be turned off, by allowing the switch 311 to be turned on and allowing the switch 315 to be turned off such that a voltage is applied to the other end of the switch 331 through the buck circuit 310. In an embodiment, the charging circuit 130 may allow the switches 311 and 315 to be turned off, by allowing the switch 321 to be turned on and allowing the switch 325 to be turned off such that a voltage is applied to the other end of the switch 331 through the buck circuit 320. In an embodiment, the charging circuit 130 may allow the switch 321 to be turned on and may allow the switch 325 to be turned off such that a voltage is applied to the other end of the switch 331 through the buck circuit 310 and the buck circuit 320.

In an embodiment, the charging circuit 130 may allow the switches 311 and 315 to be alternately turned on and off. In an embodiment, when decreasing the input voltage by using the buck circuit 310, the charging circuit 130 may control the switches 311 and 315 such that the switches 311 and 315 are alternately turned on and off. In an embodiment, when the switch 311 is turned on, the charging circuit 130 may control the switches 311 and 315 such that the switch 315 is turned off. In an embodiment, when the switch 311 is turned off, the charging circuit 130 may control the switches 311 and 315 such that the switch 315 is turned on.

In an embodiment, the charging circuit 130 may control the switches 311 and 315 such that the voltage of one end of the switch 331 has a specified voltage. In an embodiment, the switches 311 and 315 may be controlled based on an on/off ratio such that the voltage of one end of the switch 331 has a specified voltage. In an embodiment, the on/off ratio may be a ratio between a period, in which the switch 311 is turned on during a specified period, and a period in which the switch 311 is turned off during the specified period.

In an embodiment, while the switches 311 and 315 are alternately controlled (or while the input voltage is decreased), the charging circuit 130 may set the on and off of the switches 321 and 325 of the buck circuit 320 and the switches 331 and 335 of the boost circuit 330. In an embodiment, the charging circuit 130 may allow the switches 321 and 325 to be turned off by allowing the switch 331 to be turned on and allowing the switch 335 to be turned off.

In an embodiment, the charging circuit 130 may allow the switches 321 and 325 to be alternately turned on and off. In an embodiment, when decreasing the input voltage by using the buck circuit 320, the charging circuit 130 may control the switches 321 and 325 such that the switches 321 and 325 are alternately turned on and off. In an embodiment, when the switch 321 is turned on, the charging circuit 130 may control the switches 321 and 325 such that the switch 325 is turned off. In an embodiment, when the switch 321 is turned off, the charging circuit 130 may control the switches 321 and 325 such that the switch 325 is turned on.

In an embodiment, the charging circuit 130 may control the switches 321 and 325 such that the voltage of one end of the switch 331 has a specified voltage. In an embodiment, the switches 321 and 325 may be controlled based on an on/off ratio such that the voltage of one end of the switch 331 has a specified voltage. In an embodiment, the on/off ratio may be a ratio between a period, in which the switch 321 is turned on during a specified period, and a period in which the switch 321 is turned off during the specified period.

In an embodiment, while the switches 321 and 325 are alternately controlled (or while the input voltage is decreased), the charging circuit 130 may set the on and off of the switches 311 and 315 of the buck circuit 310 and the switches 331 and 335 of the boost circuit 330. In an embodiment, the charging circuit 130 may allow the switches 311 and 315 to be turned off by allowing the switch 331 to be turned on and allowing the switch 335 to be turned off.

In an embodiment, the charging circuit 130 may allow the switches 311, 315, 321, and 325 to be alternately turned on and off. In an embodiment, when the decreasing an input voltage by using the buck circuit 310 and the buck circuit 320, the charging circuit 130 may control the switches 311, 315, 321, and 325 such that the switches 311 and 315 are alternately turned on and off, and the switches 321 and 325 are alternately turned on and off. In an embodiment, when the switch 311 is turned on, the charging circuit 130 may control the switches 311 and 315 such that the switch 315 is turned off. When the switch 321 is turned on, the charging circuit 130 may control the switches 321 and 325 such that the switch 325 is turned off. In an embodiment, when the switch 311 is turned off, the charging circuit 130 may control the switches 311 and 315 such that the switch 315 is turned on. When the switch 321 is turned off, the charging circuit 130 may control the switches 321 and 325 such that the switch 325 is turned on.

In an embodiment, the charging circuit 130 may control the switches 311, 315, 321, and 325 such that the voltage of one end of the switch 331 has a specified voltage. In an embodiment, the switches 311, 315, 321, and 325 may be controlled based on a first on/off ratio and a second on/off ratio such that the voltage of one end of the switch 331 has a specified voltage. In an embodiment, the first on/off ratio may be a ratio between a period, in which the switch 311 is turned on during a specified period, and a period in which the switch 311 is turned off during the specified period. In an embodiment, the second on/off ratio may be a ratio between a period, in which the switch 321 is turned on during a specified period, and a period in which the switch 321 is turned off during the specified period.

In an embodiment, while the switches 311, 315, 321, and 325 are alternately controlled (or while the input voltage is decreased), the charging circuit 130 may set the on and off of the switches 331 and 335 of the boost circuit 330. In an embodiment, the charging circuit 130 may allow the switch 331 to be turned on and may allow the switch 335 to be turned off.

In an embodiment, while the switches 311, 315, 321, and 325 are alternately controlled (or while the input voltage is decreased), the charging circuit 130 may control the switches 311 and 315 at a first control period and may control the switches 321 and 325 at a second control period. In an embodiment, the first control period may be the same as the second control period. In an embodiment, a start time point of the first control period may be different from a start time point of the second control period. In an embodiment, a phase of the first control period may be different from a phase of the second control period. In an embodiment, the charging circuit 130 may control the switches 311 and 315 from the first time point at the first control period, and may control the switches 321 and 325 from the second time point at the second control period. In an embodiment, a phase difference between the first control period and the second control period may correspond to 180 degrees.

FIG. 3B shows graphs of a case where an input voltage is decreased by using the buck circuit 310 and the buck circuit 320.

In FIG. 3B, I1 may denote a current output through the inductor 317; I2 may denote a current output through the inductor 327; and, I3 may denote a current input to the boost circuit 330. In FIG. 3B, Q1 may denote the on/off of the switch 311, and Q2 may denote the on/off of the switch 321.

Referring to FIG. 3B, the switches 311 and 321 may be alternately turned on and off at the same period. In an embodiment, when each of periods t1 and t2 are composed of 6 unit times, in each of the periods t1 and t2, the switch 311 may be in an on state during the first two unit times, and may be in an off state during the remaining four unit times. In an embodiment, when each of the periods t1 and t2 are composed of 6 unit times, in each of the periods t1 and t2, the switch 321 may be in an off state during the first three unit times, may be in an on state during the fourth and fifth unit times, and may be in an off state during the last sixth unit time.

It may be seen that I1 increases while the switch 311 is turned on, and I1 decreases while the switch 311 is turned off. It may be seen that I2 increases while the switch 321 is turned on, and I2 decreases while the switch 321 is turned off. It may be seen that I3 has little ripple as the switches 311 and 321 are alternately turned on and off at the same period.

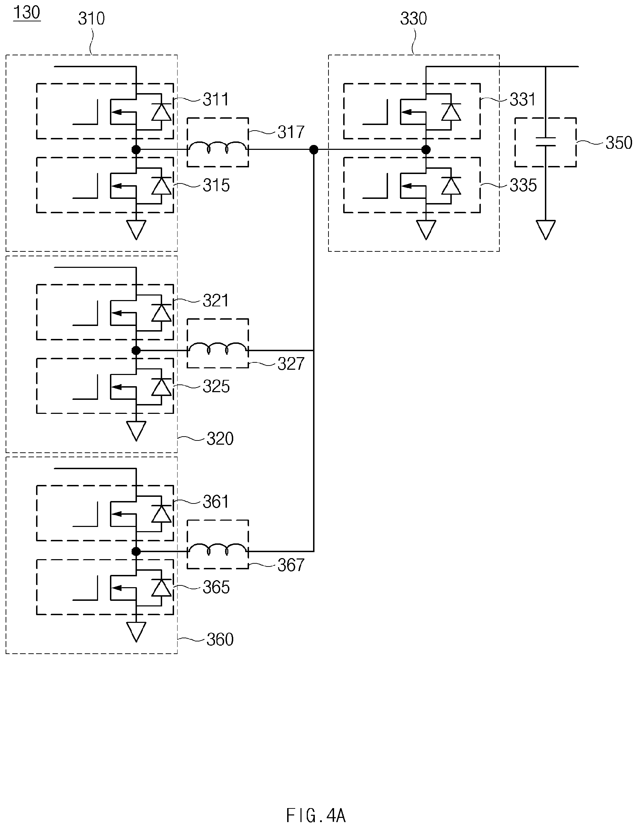

FIG. 4A is a circuit diagram of the charging circuit 130, according to an embodiment of the disclosure.

FIG. 4A illustrates that, compared to FIG. 3A, the charging circuit 130 further includes one buck circuit 360 and one inductor 360.

In an embodiment, the buck circuit 360 may include two switches 361 and 365. In an embodiment, an input voltage may be applied to one end of the switch 361. In an embodiment, the other end of the switch 361 may be electrically connected to one end of the switch 365. In an embodiment, the other end of the switch 365 may be electrically connected to ground. In an embodiment, the other end of the switch 361 and one end of the switch 365 may be electrically connected to one end of the inductor 367.

In an embodiment, when increasing an input voltage, the charging circuit 130 may set the on and off of the switches 311, 315, 321, 325, 361, and 365 of at least one buck circuit among the three buck circuits 310, 320, and 360. In an embodiment, when a voltage is applied to the other end of the switch 331 through the buck circuit 360, the charging circuit 130 may allow the switch 361 to be turned on and may allow the switch 365 to be turned off. In an embodiment, when a voltage is not applied to the other end of the switch 331 through the buck circuit 360, the charging circuit 130 may allow the switches 361 and 365 to be turned off.

In an embodiment, the charging circuit 130 may allow the switches 361 and 365 to be alternately turned on and off. In an embodiment, when decreasing the input voltage by using the buck circuit 360, the charging circuit 130 may control the switches 361 and 365 such that the switches 361 and 365 are alternately turned on and off. In an embodiment, when the switch 361 is turned on, the charging circuit 130 may control the switches 361 and 365 such that the switch 365 is turned off. In an embodiment, when the switch 361 is turned off, the charging circuit 130 may control the switches 361 and 365 such that the switch 365 is turned on.

In an embodiment, the charging circuit 130 may control the switches 361 and 365 such that the voltage of one end of the switch 331 has a specified voltage. In an embodiment, the switches 361 and 365 may be controlled based on an on/off ratio such that the voltage of one end of the switch 331 has a specified voltage. In an embodiment, the on/off ratio may be a ratio between a period, in which the switch 361 is turned on during a specified period, and a period in which the switch 361 is turned off during the specified period.

In an embodiment, when two or more buck circuits are used to decrease the input voltage, control periods for the buck circuits may be the same as each other. In an embodiment, when two or more buck circuits are used to decrease the input voltage, phases between the control periods for the buck circuits may be different from each other. In an embodiment, when two or more buck circuits are used to decrease the input voltage, a phase difference between the control periods may correspond to a value obtained by dividing 360 degrees by the two or more buck circuits.

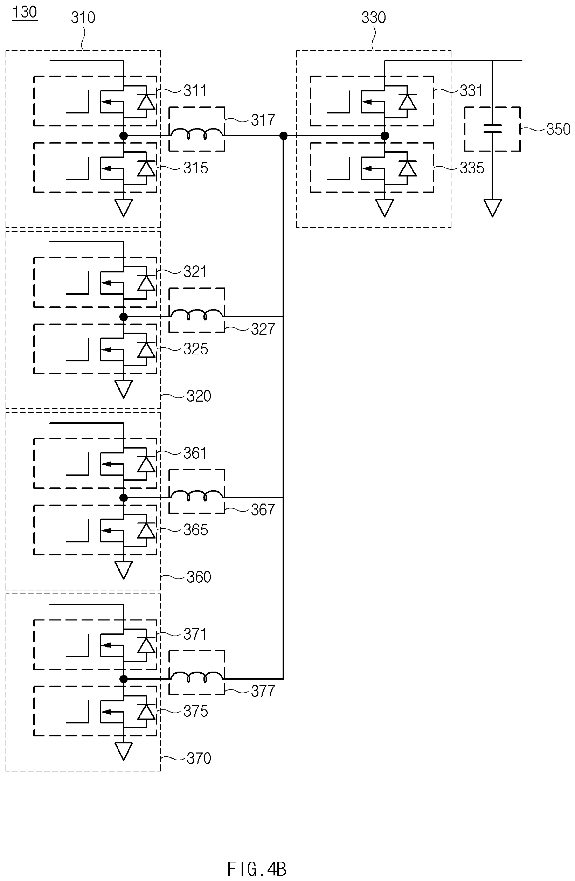

FIG. 4B is a circuit diagram of the charging circuit 130, according to an embodiment of the disclosure.

FIG. 4B illustrates that, compared to FIG. 4A, the charging circuit 130 further includes one buck circuit 370 and one inductor 370.

In an embodiment, the buck circuit 370 may include two switches 371 and 375. In an embodiment, an input voltage may be applied to one end of the switch 371. In an embodiment, the other end of the switch 371 may be electrically connected to one end of the switch 375. In an embodiment, the other end of the switch 375 may be electrically connected to ground. In an embodiment, the other end of the switch 371 and one end of the switch 375 may be electrically connected to one end of the inductor 377.

In an embodiment, when increasing an input voltage, the charging circuit 130 may set the on and off of the switches 311, 315, 321, 325, 361, 365, 371, and 375 of at least one buck circuit among the four buck circuits 310, 320, 360, and 370. In an embodiment, when a voltage is applied to the other end of the switch 331 through the buck circuit 370, the charging circuit 130 may allow the switch 371 to be turned on and may allow the switch 375 to be turned off. In an embodiment, when a voltage is not applied to the other end of the switch 331 through the buck circuit 370, the charging circuit 130 may allow the switches 371 and 375 to be turned off.

In an embodiment, the charging circuit 130 may allow the switches 371 and 375 to be alternately turned on and off. In an embodiment, when decreasing the input voltage by using the buck circuit 370, the charging circuit 130 may control the switches 371 and 375 such that the switches 371 and 375 are alternately turned on and off. In an embodiment, when the switch 371 is turned on, the charging circuit 130 may control the switches 371 and 375 such that the switch 375 is turned off. In an embodiment, when the switch 371 is turned off, the charging circuit 130 may control the switches 371 and 375 such that the switch 375 is turned on.

In an embodiment, the charging circuit 130 may control the switches 371 and 375 such that the voltage of one end of the switch 331 has a specified voltage. In an embodiment, the switches 371 and 375 may be controlled based on an on/off ratio such that the voltage of one end of the switch 331 has a specified voltage. In an embodiment, the on/off ratio may be a ratio between a period, in which the switch 371 is turned on during a specified period, and a period in which the switch 371 is turned off during the specified period.

In an embodiment, when two or more buck circuits are used to decrease the input voltage, control periods for the buck circuits may be the same as each other. In an embodiment, when two or more buck circuits are used to decrease the input voltage, phases between the control periods for the buck circuits may be different from each other. In an embodiment, when two or more buck circuits are used to decrease the input voltage, a phase difference between the control periods may correspond to a value obtained by dividing 360 degrees by the two or more buck circuits.

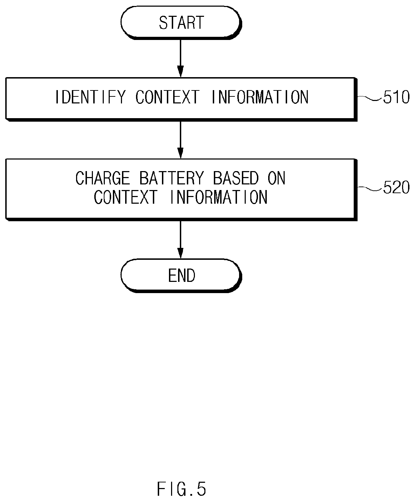

FIG. 5 is a flowchart of the electronic device 101, according to an embodiment of the disclosure.

Operations of FIG. 5 may be performed by the controller 110.

Referring to FIG. 5, in operation 510, the controller 110 may identify context information. In an embodiment, the context information may be obtained by the processor 115 and/or the battery 140. In an embodiment, the context information may include state information of the electronic device 101 and/or state information of the battery 140. In an embodiment, the state information may include information about the operation state of the electronic device 101. In an embodiment, the operation state of the electronic device 101 may include an active state, a standby state (or, sleep state), or an off state. In an embodiment, the operation state of the electronic device 101 may include whether the adapter 201 is connected, or supply power of the adapter 201. In an embodiment, the state of the battery 140 may include the number of battery cells of the battery 140. In an embodiment, the state information may include the voltage of the supply power, and/or the required voltage of the battery 140.

In operation 520, the controller 110 may charge the battery 140 based on the context information.

In an embodiment, the controller 110 may control the charging circuit 130 so as to charge the battery 140 based on the context information. In an embodiment, the controller 110 may control the charging circuit 130 so as to output an output voltage corresponding to the required voltage of the battery 140. In an embodiment, the controller 110 may control the charging circuit 130 such that the charging circuit 130 adjusts (e.g., decreases or increases) an input voltage.

In an embodiment, the charging circuit 130 may adjust (e.g., decrease or increase) the input voltage under the control of the controller 110. In an embodiment, the charging circuit 130 may decrease the input voltage by using at least one buck circuit among 'M' buck circuits.

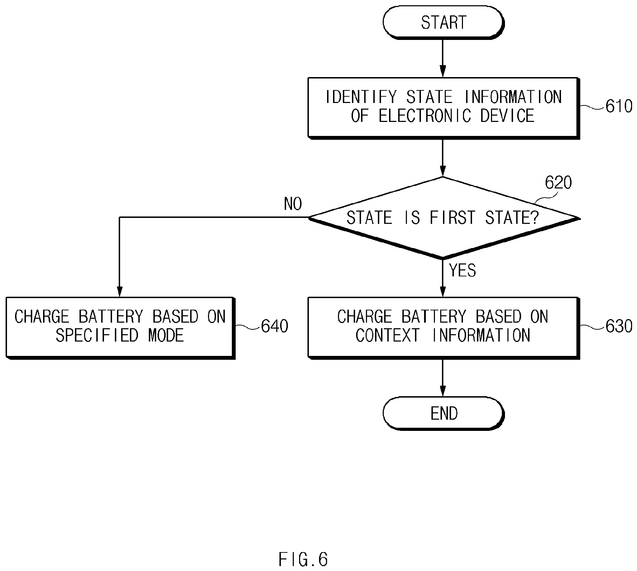

FIG. 6 is a flowchart of the electronic device 101, according to an embodiment of the disclosure.

Operations of FIG. 6 may be performed by the controller 110.

Referring to FIG. 6, in operation 610, the controller 110 may identify state information of the electronic device 101. In an embodiment, the state information may include information about the operation state of the electronic device 101. In an embodiment, the operation state of the electronic device 101 may include an active state, a standby state (or, sleep state), or an off state.

In operation 620, the controller 110 may determine whether the state of the electronic device 101 is a first state. In an embodiment, the controller 110 may determine whether the state of the electronic device 101 is an active state.

The controller 110 may perform operation 630 based on the fact that it is determined in operation 620 that the state of the electronic device 101 is the first state (e.g., an active state). The controller 110 may perform operation 640 based on the fact that it is determined in operation 620 that the state of the electronic device 101 is not the first state (e.g., an active state).

In operation 630, the controller 110 may charge the battery 140 based on the context information.

In an embodiment, the controller 110 may control the charging circuit 130 so as to charge the battery 140 based on the context information. In an embodiment, the controller 110 may control the charging circuit 130 so as to output an output voltage corresponding to the required voltage of the battery 140. In an embodiment, the controller 110 may control the charging circuit 130 such that the charging circuit 130 adjusts (e.g., decreases or increases) the input voltage.

In an embodiment, the charging circuit 130 may adjust (e.g., decrease or increase) the input voltage under the control of the controller 110. In an embodiment, the charging circuit 130 may decrease the input voltage by using at least one buck circuit among 'M' buck circuits.

In operation 640, the controller 110 may charge the battery 140 based on a specified mode.

In an embodiment, when the decrease in the input voltage is required to charge the battery 140, the controller 110 may allow the controller 110 to decrease the input voltage by using a buck circuit.

According to an embodiment of the disclosure, an electronic device may include a battery, an interface capable of being electrically connected to an external power source and receiving power from the external power source, and a charging circuit that supplies power to the battery based on an input voltage supplied through the interface. According to an embodiment, the charging circuit may include a first buck circuit including a first switching element and a second switching element, a second buck circuit including a third switching element and a fourth switching element, and a boost circuit including a fifth switching element and a sixth switching element. In an embodiment, an input voltage may be applied to an input node of the first switching element and an input node of the third switching element. In an embodiment, one end of a first inductor may be connected to a first connection node between the first switching element and the second switching element of the first buck circuit. In an embodiment, one end of a second inductor may be connected to a second connection node between the third switching element and the fourth switching element of the second buck circuit. In an embodiment, the other end of the first inductor and the other end of the second inductor may be connected to a third connection node between the fifth switching element and the sixth switching element of the boost circuit. In an embodiment, the fifth switching element may be connected in parallel to the battery and a capacitor.

As such, compared to a case where one buck circuit is provided, an inductor having a lower value of inductance may be used by connecting two buck circuits to one boost circuit. Moreover, compared to a case where two boost circuits are provided, the number of mounted capacitors may be reduced by connecting two buck circuits to one boost circuit. Furthermore, compared to a case where one buck circuit is provided, an inductor having a lower value of inductance may be used by connecting two buck circuits to one boost circuit.

Besides, the ripple of an output current may be reduced as two buck circuits decrease an input voltage by using different phase differences.

Power loss may be reduced by selectively determining buck circuits, which are used to decrease the input voltage, from among two buck circuits.

According to an embodiment of the disclosure, the charging circuit may include a third buck circuit including a seventh switching element and an eighth switching element. In an embodiment, one end of a third inductor may be connected to a fourth connection node between the seventh switching element and the eighth switching element of the third buck circuit. In an embodiment, the other end of the third inductor may be connected to the third connection node.

According to an embodiment of the disclosure, the charging circuit may include a fourth buck circuit including a ninth switching element and a tenth switching element. In an embodiment, one end of a fourth inductor may be connected to a fifth connection node between the ninth switching element and the tenth switching element of the fourth buck circuit. In an embodiment, the other end of the fourth inductor may be connected to the third connection node.

According to an embodiment of the disclosure, the charging circuit may output a voltage value of the input voltage as a first adjustment value by controlling on and off of the fifth switching element and the sixth switching element of the boost circuit.

According to an embodiment of the disclosure, the charging circuit may output the voltage value of the input voltage as the second adjustment value by controlling the first buck circuit and/or the second buck circuit.

According to an embodiment of the disclosure, the charging circuit may output the input voltage as the second adjustment value by using one buck circuit among the first buck circuit or the second buck circuit based on the voltage value being a first voltage value.

According to an embodiment of the disclosure, the charging circuit may output the input voltage as the second adjustment value by using the first buck circuit and the second buck circuit based on the voltage value being a second voltage value. In an embodiment, the second voltage value may be higher than the first voltage value.

According to an embodiment of the disclosure, the charging circuit may control the first buck circuit and the second buck circuit such that a first control period for the first buck circuit and a second control period for the second buck circuit have a specified phase difference.

In an embodiment, the specified phase difference may be based on a number of buck circuits included in the charging circuit.

According to an embodiment of the disclosure, the charging circuit may output the input voltage as the second adjustment value by using one buck circuit among the first buck circuit or the second buck circuit, based on a power mode of the electronic device being a specified mode.

According to an embodiment of the disclosure, an electronic device may include a power delivery integrated circuit (PDIC) configured to identify the input voltage of power supplied by the external power source when the interface is electrically connected to the external power source. According to an embodiment of the disclosure, the charging circuit may control at least one of the first buck circuit, the second buck circuit, or the boost circuit based on the identified input voltage.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device 101). For example, a processor (e.g., the processor 115) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a battery;
an interface capable of being electrically connected to an external power source and configured to receive power from the external power source; and
a charging circuit configured to supply power to the battery based on an input voltage supplied through the interface,
wherein the charging circuit includes:
a first buck circuit including a first switching element and a second switching element;
a second buck circuit including a third switching element and a fourth switching element; and
a boost circuit including a fifth switching element and a sixth switching element,
wherein the input voltage is applied to an input node of the first switching element and an input node of the third switching element,
wherein one end of a first inductor is connected to a first connection node between the first switching element and the second switching element of the first buck circuit,
wherein one end of a second inductor is connected to a second connection node between the third switching element and the fourth switching element of the second buck circuit,
wherein the other end of the first inductor and the other end of the second inductor are connected to a third connection node between the fifth switching element and the sixth switching element of the boost circuit, and
wherein the fifth switching element is connected in parallel to a battery and a capacitor.

2. The electronic device of claim 1, wherein the charging circuit includes:
a third buck circuit including a seventh switching element and an eighth switching element,
wherein one end of a third inductor is connected to a fourth connection node between the seventh switching element and the eighth switching element of the third buck circuit, and
wherein the other end of the third inductor is connected to the third connection node.

3. The electronic device of claim 2, wherein the charging circuit includes:
a fourth buck circuit including a ninth switching element and a tenth switching element,
wherein one end of a fourth inductor is connected to a fifth connection node between the ninth switching element and the tenth switching element of the fourth buck circuit, and
wherein the other end of the fourth inductor is connected to the third connection node.

4. The electronic device of claim 1, wherein the charging circuit is configured to:
output a voltage value of the input voltage as a first adjustment value by controlling on and off of the fifth switching element and the sixth switching element of the boost circuit.

5. The electronic device of claim 1, wherein the charging circuit is configured to:
output the input voltage as a second adjustment value by using one buck circuit among the first buck circuit or the second buck circuit based on the voltage value being a first voltage value; or
output the input voltage as the second adjustment value by using the first buck circuit and the second buck circuit based on the voltage value being a second voltage value higher than the first voltage value.

6. The electronic device of claim 5, wherein the charging circuit is configured to:
control the first buck circuit and the second buck circuit such that a first control period for the first buck circuit and a second control period for the second buck circuit have a specified phase difference.

7. The electronic device of claim 5, wherein the charging circuit is configured to:
output the input voltage as the second adjustment value by using one buck circuit among the first buck circuit or the second buck circuit, based on a power mode of the electronic device being a specified mode.

8. The electronic device of claim 1, further comprising:
a power delivery integrated circuit (PDIC) configured to identify the input voltage of power supplied by the external power source when the interface is electrically connected to the external power source,
wherein the charging circuit includes:
control at least one of the first buck circuit, the second buck circuit, or the boost circuit based on the identified input voltage.

9. A charging circuit comprising:
a first buck circuit including a first switching element and a second switching element;
a second buck circuit including a third switching element and a fourth switching element; and
a boost circuit including a fifth switching element and a sixth switching element,
wherein an input voltage of an external device is applied to an input node of the first switching element and an input node of the third switching element,
wherein one end of a first inductor is connected to a first connection node between the first switching element and the second switching element of the first buck circuit,
wherein one end of a second inductor is connected to a second connection node between the third switching element and the fourth switching element of the second buck circuit,
wherein the other end of the first inductor and the other end of the second inductor are connected to a third connection node between the fifth switching element and the sixth switching element of the boost circuit,
wherein the fifth switching element is connected to a capacitor, and
wherein the fifth switching element is capable of supplying power to another external device through a node connected to the capacitor.

10. The charging circuit of claim 9, further comprising:
a third buck circuit including a seventh switching element and an eighth switching element,
wherein one end of a third inductor is connected to a fourth connection node between the seventh switching element and the eighth switching element of the third buck circuit, and
wherein the other end of the third inductor is connected to the third connection node.

11. The charging circuit of claim 10, further comprising:
a fourth buck circuit including a ninth switching element and a tenth switching element,
wherein one end of a fourth inductor is connected to a fifth connection node between the ninth switching element and the tenth switching element of the fourth buck circuit, and
wherein the other end of the fourth inductor is connected to the third connection node.

12. The charging circuit of claim 9, wherein the charging circuit is configured to:
output a voltage value of the input voltage as a first adjustment value by controlling on and off of the fifth switching element and the sixth switching element of the boost circuit.

13. The charging circuit of claim 9, wherein the charging circuit is configured to:
output the input voltage as a second adjustment value by using one buck circuit among the first buck circuit or the second buck circuit based on the voltage value being a first voltage value; or
output the input voltage as the second adjustment value by using the first buck circuit and the second buck circuit based on the voltage value being a second voltage value higher than the first voltage value.

14. The charging circuit of claim 13, wherein the charging circuit is configured to:
control the first buck circuit and the second buck circuit such that a first control period for the first buck circuit and a second control period for the second buck circuit have a specified phase difference.

15. The charging circuit of claim 14, wherein the specified phase difference is based on a number of buck circuits included in the charging circuit.
